# EUROPEAN PATENT APPLICATION

(11) **EP 4 083 817 A1**
(43) Date of publication of application: **02.11.2022**
(21) Application number: 21741392.1
(22) Date of filing: 08.01.2021
(51) Int. Cl.: G06F 16/75, G06F 16/783, G06F 40/289

(54) **VIDEO TAG DETERMINATION METHOD, DEVICE, TERMINAL, AND STORAGE MEDIUM**

(30) Priority: 17.01.2020 CN 202010052109
(71) Applicant: GUANGDONG OPPO MOBILE TELECOMMUNICATIONS CORP., LTD., Dongguan, Guangdong 523860 (CN)
(72) Inventor: LI, Han, Dongguan, Guangdong 523860 (CN); LI, Yaqian, Dongguan, Guangdong 523860 (CN); JIANG, Yi, Dongguan, Guangdong 523860 (CN)
(74) Representative: Fassio, Valeria
(86) International application number: PCT/CN2021/070901
(87) International publication number: WO 2021/143624

(57) **Abstract**

Provided are a video tag determination method, device, terminal, and storage medium, belonging to the technical field of computers. The method comprises: obtaining a video to be processed (201); extracting time-sequence feature information between a plurality of first target frame images in the video to be processed, the time-sequence feature information being information determined according to the feature differences of the first target frame images at different time points (202); according to the time-sequence feature information, generating a dynamic-event description text used for describing a dynamic event corresponding to the video to be processed (203); according to the dynamic-event description text, determining a video tag of the video to be processed (204). By means of obtaining the description text of the dynamic event in the video to be processed, a video tag of the video to be processed is determined, thus the video information is more deeply exploited such that a user can manage videos more accurately and conveniently.

## Description

This application claims a priority to a prior Chinese patent application No. 202010052109.5, entitled "VIDEO TAG DETERMINATION METHOD, DEVICE, TERMINAL, AND STORAGE MEDIUM", filed on January 17, 2020, the entire content of which is hereby incorporated by reference.

### TECHNICAL FIELD

The disclosure relates to the field of computer technologies, and more particularly to a video tag determination method, a video tag determination apparatus, a terminal, and a storage medium.

### BACKGROUND

With the development of computer technologies, more and more users like to record their lives by capturing videos, resulting in an increasing number of videos stored in a terminal. In order to facilitate classification and management of videos, video tags are commonly added to classify and manage the videos through the video tags.

In related arts, when adding a tag to a video, the tag of the video is generally determined according to a generation time or a generation location of the video.

### SUMMARY

Embodiments of the present disclosure provides a video tag determination method, a video tag determination apparatus, a terminal, and a storage medium, which can improve the accuracy of video tagging. Technical solutions as proposed may be as follows.

In an aspect, a video tag determination method is provided, and the method may include:
acquiring a video to be processed;
extracting time-sequence feature information among first target frame images in the video to be processed, where the time-sequence feature information is determined based on feature differences of the first target frame images at different time points;
generating, based on the time-sequence feature information, a dynamic event description text for describing a dynamic event corresponding to the video to be processed; and
determining, based on the dynamic event description text, a video tag of the video to be processed.

In another aspect, a video tag determination apparatus is provided, and the apparatus may include:
an acquisition module, configured to acquire a video to be processed;
an extraction module, configured to extract time-sequence feature information among first target frame images in the video to be processed, wherein the time-sequence feature information is determined based on feature differences of the first target frame images at different time points;
a generation module, configured to generate a dynamic event description text for describing a dynamic event corresponding to the video to be processed based on the time-sequence feature information; and
a first determination module, configured to determine a video tag of the video to be processed based on the dynamic event description text.

In a still another aspect, a terminal is provided, and the terminal may include a processor and a memory. The memory is stored with at least one instruction, and the at least one instruction is configured (i.e., structured and arranged) to be executed by the processor to implement the video tag determination method as described in the above aspect.

In even still another aspect, a computer-readable storage medium is provided, and the non-transitory storage medium is stored with at least one instruction, and the at least one instruction is configured to be executed by a processor to implement the video tag determination method as described in the above aspect.

In further still another aspect, a computer program product is provided, and the computer program product is stored with at least one instruction, and the at least one instruction is configured to be loaded and executed by a processor to implement the video tag determination method shown in the above embodiments.

### BRIEF DESCRIPTION OF DRAWINGS

FIG. 1 illustrates a schematic structural diagram of a terminal according to an exemplary embodiment of the present disclosure.
FIG. 2 illustrates a flowchart of a video tag determination method according to an exemplary embodiment of the present disclosure.
FIG. 3 illustrates a flowchart of a video tag determination method according to another exemplary embodiment of the present disclosure.
FIG. 4 illustrates a schematic diagram showing determination of time-sequence feature information according to an exemplary embodiment of the present disclosure.
FIG. 5 illustrates a flowchart of a video tag determination method according to still another exemplary embodiment of the present disclosure.
FIG. 6 illustrates a flowchart of a video tag determination method according to further another exemplary embodiment of the present disclosure.
FIG. 7 illustrates a flowchart of a video tag determination method according to even another exemplary embodiment of the present disclosure.
FIG. 8 illustrates a flowchart of a video tag determination method according to further still another exemplary embodiment of the present disclosure.
FIG. 9 illustrates a flowchart of a video tag determination method according to even still another exemplary embodiment of the present disclosure.
FIG. 10 illustrates a flowchart of a video tag determination method according to even further another exemplary embodiment of the present disclosure.
FIG. 11 illustrates a schematic structural block diagram of a video tag determination apparatus according to an embodiment of the present disclosure.

### DETAILED DESCRIPTION OF EMBODIMENTS

In order to make purposes, technical solutions, and advantages of the present disclosure clearer, embodiments of the present disclosure will be further described in detail below in combination with the accompanying drawings.

"Multiple" mentioned herein refers to two or more. "And / or" describes an association relationship of associated objects, indicating that there may be three relationships, for example, A and/or B, which may indicate that A exists alone, A and B exist simultaneously, and B exists alone. The symbol "/" generally indicates that front and rear associated objects are an "or" relationship.

In an embodiment of the present disclosure, a technical solution is provided as follows:
a video tag determination method, may include:
acquiring a video to be processed;
extracting time-sequence feature information among multiple first target frame images in the video to be processed, where the time-sequence feature information is determined based on feature differences of the multiple first target frame images at different time points;
generating, based on the time-sequence feature information, a dynamic event description text for describing a dynamic event corresponding to the video to be processed; and
determining, based on the dynamic event description text, a video tag of the video to be processed.

In an implementation, the extracting time-sequence feature information among multiple first target frame images in the video to be processed may include:
determining a target object in the multiple first target frame images;
determining, based on positions of the target object in the multiple first target frame images, displacement information of the target object in the multiple first target frame images; and
determining, based on the displacement information of the target object in the multiple first target frame images, the time-sequence feature information among multiple first target frame images in the video to be processed.

In an implementation, the determining displacement information of the target object in the multiple first target frame images based on positions of the target object in the multiple first target frame images may include:
determining target pixels containing similar pixel information in the multiple first target frame images;
determining positions of the target pixels in the multiple first target frame images;
determining, based on the positions of the target pixels in adjacent ones of the first target frame images, position differences of the target pixels to obtain displacement vectors of the target pixels; and
constituting the displacement information of the target object in the first target frame images by the displacement vectors of the target pixels in the first target frame images.

In an implementation, the determining, based on the displacement information of the target object in the first target frame images, the timing-series feature information among the first target frame images in the video to be processed may include:
determining a time sequence of the multiple first target frame images in the video to be processed;
constituting, based on the time sequence and preset weights, a vector matrix by the displacement vectors of the target pixels; and
taking the vector matrix as the time-sequence feature information.

In an implementation, the generating, based on the time-sequence feature information, a dynamic event description text for describing a dynamic event corresponding to the video to be processed may include:
identifying, in the video to be processed, a target object having a dynamic event occurred thereon;
determining, based on the time-sequence feature information, the dynamic event occurred on the target object; and
generating, based on the target object and the dynamic event occurred on the target object, the dynamic event description text.

In an implementation, the determining, based on the time-sequence feature information, the dynamic event occurred on the target object may include:
acquiring a video classification model for determining the dynamic event occurred on the target object based on the time-sequence feature information; and
inputting the time-sequence feature information into the video classification model to obtain the dynamic event occurred on the target object in the video to be processed.

In an implementation, the determining a video tag of the video to be processed based on the dynamic event description text may include:
performing word segmentation on the dynamic event description text to obtain a plurality of keywords;
selecting, from the plurality of keywords, target dynamic event keywords whose parts of speech are target parts of speech; and
forming the video tag of the video to be processed by the target dynamic event keywords.

In an implementation, the method may further include:
determining, based on a second target frame image in the video to be processed, a static image content of the second target frame image; and
classifying, based on the static image content, the second target frame image to obtain a static image tag of the second target frame image;
where the determining, based on the dynamic event description text, a video tag of the video to be processed, including:
   determining, based on the static image tag and the dynamic event description text, the video tag of the video to be processed.

In an implementation, the extracting time-sequence feature information among multiple first target frame images in the video to be processed may include:
segmenting, based on a first target duration, the video to be processed into at least one sub-video;
determining time-sequence feature information among a plurality of third target frame images of the at least one sub-video; and
determining, based on the time-sequence feature information among the plurality of third target frame images of the at least one sub-video, the time-sequence feature information among the plurality of first target frame images in the video to be processed.

In an implementation, the segmenting, based on a first target duration, the video to be processed into at least one sub-video may include:
determining a video duration of the video to be processed;
in response to the video duration being less than a second target duration, segmenting the video to be processed based on the first target duration to thereby obtain the at least one sub-video;
in response that the video duration being no less than the second target duration, segmenting the video to be processed within the second target duration based on the first target duration to thereby obtain a first sub-video, determining a second sub-video of the video to be processed, and taking the first sub-video and the second sub-video as the at least one sub-video of the video to be processed, where the second sub-video is a sub-video extracted from the video to be processed exceeding the second target duration.

In an implementation, the method may further include:
storing the video tag of the video to be processed in a video library, wherein the video library comprises video identifiers of a plurality of videos and the video tag of the video to be processed;
determining, in response to receiving a target video tag to be queried, a target video matching the target video tag from the video library based on the target video tag; and
displaying the target video on a display interface.

In the illustrated embodiment of the present disclosure, the video to be processed is acquired. The time-sequence feature information among the multiple first target frame images in the video to be processed is extracted, and the time-sequence feature information is the information determined according to the feature differences of the multiple first target frame images at the different time points. The dynamic event description text for describing the dynamic event corresponding to the video to be processed is generated according to the time-sequence feature information. The video tag of the video to be processed is determined according to the dynamic event description text. By acquiring the dynamic event description text in the video to be processed, the video tag of the video to be processed is determined, and the video information is mined more deeply, so that users can manage the video more accurately and conveniently.

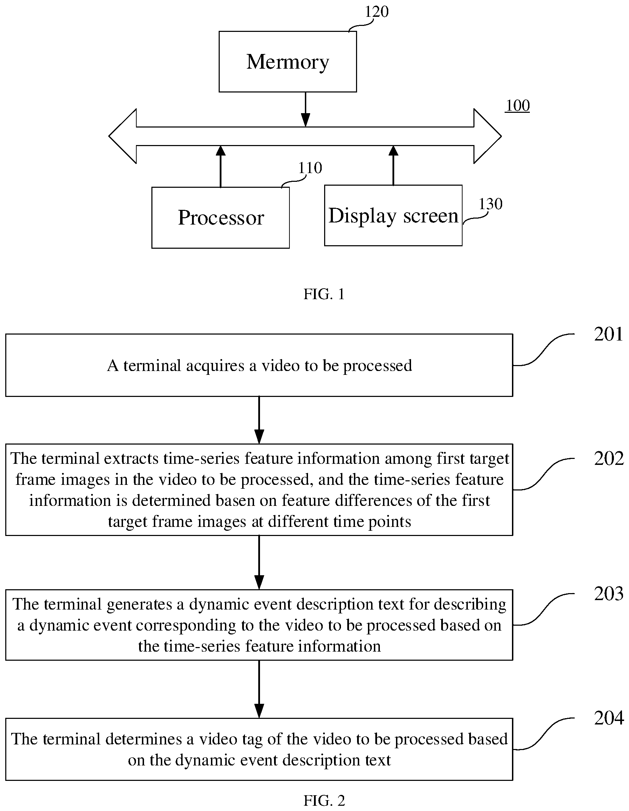

FIG. 1 illustrates a structural block diagram of a terminal 100 according to an exemplary embodiment of the present disclosure. The terminal 100 may be a smart phone, a tablet computer, a notebook computer, or a wearable device. The terminal 100 in the present disclosure may include one or more of the following components: a processor 110, a memory 120, and a display screen 130.

The processor 110 may include one or more processing cores. The processor 110 coupled to various components throughout the terminal 100 via various interfaces and connections, performs various functions and processes data in the terminal 100 by executing at least one instruction stored in the memory 120 and calling up data stored in the memory 120. Alternatively, the processor 110 may employ at least one hardware of digital signal processing (DSP), field-programmable gate array (FPGA), and programmable logic array (PLA). The processor 110 may integrate one or a combination selected from a central processing unit (CPU), a graphics processing unit (GPU), a neural-network processing unit (NPU), and a modem. Among them, the CPU is mainly used for processing an operating system, a user interface, an application program, and the like; the GPU is used for rendering and drawing contents required to be displayed by the display screen 130; the NPU is used for implementing artificial intelligence (AI) functions; and the modem is used for processing wireless communication. It can be understood that the above modem may also be implemented by a single chip without being integrated into the processor 110.

In an implementation, in the embodiment of the present disclosure, a process of determining dynamic feature information and the static image tag through neural network is realized through NPU. The video frame image is rendered through GPU, and the application program in the terminal is executed through CPU.

The memory 120 may include a random access memory (RAM), or a read-only memory (ROM). Alternatively, the memory 120 may include a non-transitory computer-readable storage medium. The memory 120 may be used to store at least one instruction. The memory 120 may include a program storage region and a data storage region. The program storage region may store an instruction for realizing the operating system, an instruction for at least one function (such as a touch function, a sound playing function, an image playing function, etc.), and an instruction for realizing the following method embodiments, etc. The data storage region may store data (such as audio data, phonebook) created according to the use of the terminal 100.

In an implementation, in the embodiment of the present disclosure, data such as the video to be processed in the terminal is stored through the memory 120.

The display screen 130 is a display component for displaying a user interface. Alternatively, the display screen 130 is a display screen with the touch function. Through the touch function, the user may use any suitable object such as a finger, a touch pen to perform touch operation on the display screen 130.

In an implementation, in the embodiment of the present disclosure, an image of the video to be processed is displayed through the display screen 130.

The display screen 130 is usually disposed on a front panel of the terminal 100. The display screen 130 may be designed as a full screen, a curved screen, an anomalous screen, a double-sided screen, or a folding screen. The display screen 130 may also be designed as a combination of a full screen and a curved screen, or a combination of an anomalous screen and a curved screen, etc., which is not limited in this embodiment.

In an implementation, the terminal 100 may further include a camera component for capturing video, which may be a front camera or a rear camera of the terminal.

In addition, it can be understood by those skilled in the art that the structure of the terminal 100 shown in the accompanying drawings does not constitute a limitation of the terminal 100, and the terminal 100 may include more or fewer components than shown, a combination of some components, or a different arrangement of the components. For example, the terminal 100 may further include a microphone, a speaker, a radio frequency (RF) circuit, an input unit, a sensor, an audio circuit, a wireless fidelity (Wi-Fi) module, a power supply, a Bluetooth module, and other components, which will not be described here.

FIG. 2 illustrates a flowchart of a video tag determination method according to an exemplary embodiment of the present disclosure. An execution subject in the embodiment of the present disclosure may be the terminal 100, the processor 110 in the terminal 100, or the operating system in the terminal 100. This embodiment is illustrated with the execution subject as the terminal 100. In the embodiment of the present disclosure, the video tag to be processed is described by taking the displacement information of the target object in the first target frame images of the video to be processed as an example. The method may include blocks 201 through 204 as follows.

At the block 201: the terminal acquires a video to be processed.

The video to be processed may be a video file or a video stream containing multiple frames of images. The video to be processed may be a video to be processed obtained by the terminal from a video library. The video library may be a video library in the terminal or server, and multiple videos and images may be stored in the video library. For example, the video library may be an album software in the terminal, and the video library may also be a video library that stores video in other electronic devices that establish a network connection with the terminal. Accordingly, the terminal may directly call the video to be processed in the local album software, and the terminal may also obtain the video to be processed from the video library of the other electronic devices.

In addition, the video to be processed in the video library may be the video collected by the terminal through a camera component. The video to be processed may also be a video obtained by the terminal from the other electronic devices. The camera component may be a camera of the terminal itself, or an external camera component connected with the terminal, which is not specifically limited in the embodiment of the present embodiment.

At the block 202: the terminal extracts time-sequence feature information among first target frame images in the video to be processed, where the time-sequence feature information is determined based on feature differences of the first target frame images at different time points.

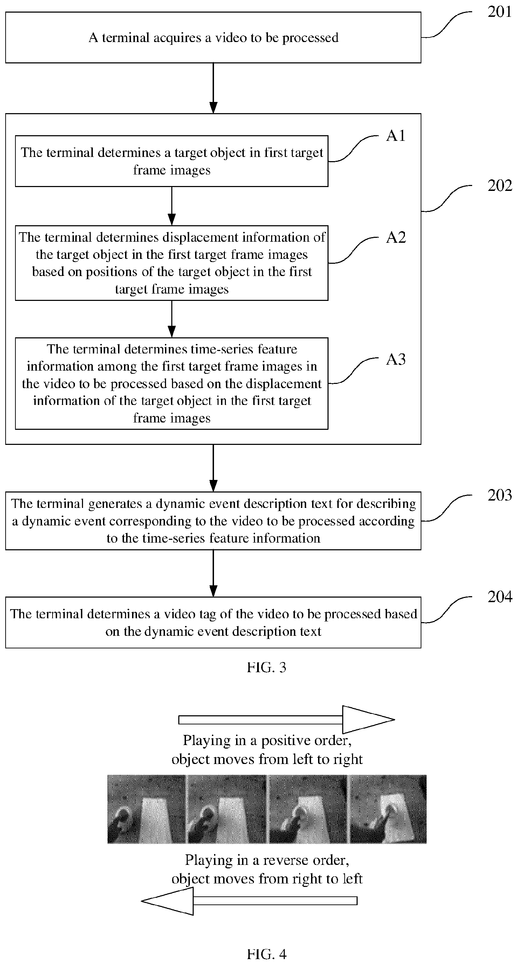

Among them, the time-sequence feature information is dynamic information among the multiple first target frame images obtained according to the feature differences of the multiple first target frame images corresponding to the different time points in the video to be processed, and is determined by position difference information of the same target object in the multiple first target frame images. The multiple first target frame images may be continuous frame images in the video to be processed, or discontinuous frame images in the video to be processed. In the embodiment of the present disclosure, this is not specifically limited. In addition, the number of the first target frame images may be set as required. In the embodiment of the present embodiment, the number of the first target frame images is not specifically limited. For example, the number of the first target frame images may be 200, 300, 350, or the like. As shown in FIG. 3, this block may be realized through the following blocks (A1)-(A3).

At the block (A1), the terminal determines a target object in the first target frame images.

Among them, the target object is the same object included in the multiple first target frame images. The target object may be an object that generates a displacement or an action in the video to be processed. The target object may be a person, an animal, a vehicle, or other object. For example, the target object may be a person, a person's arm, hands, and feet, etc., in the embodiment of the present embodiment, the category of the target object is not specifically limited.

In this block, the terminal can detect the category of the target object in the multiple first target frame images through a target detection technology. Among them, the target object may be a target object existing in each of the multiple first target frame images, and the target object may also be a target object existing in part of the multiple first target frame images.

It should be noted that when there are multiple objects in the multiple first target frame images, the multiple objects may be regarded as the target objects of the video to be processed. The terminal may also take an object with the longest appearance duration in the target frame image as the target object of the video to be processed. The terminal may also take an object generating the action or the displacement as the target object of the video to be processed. In the embodiments of the present disclosure, this is not specifically limited.

In some embodiments, the terminal determines positions of the target object in the multiple first target frame images. Among them, the terminal performs target object recognition on each of the multiple first target frame image, determines the pixel positions of the recognized target object in the multiple first target frame images, and determines the pixel positions as the positions of the target object in the multiple first target frame images.

At the block (A2), the terminal determines displacement information of the target object in the first target frame images based on positions of the target object in the first target frame images.

In this block, the terminal determines the displacement information of the target object in the multiple first target frame images according to the position of the target object in each first target frame image. Among them, the terminal respectively determines the positions of the same target object in different first target frame images, and determines the displacement information of the target object.

This block may be realized through the following steps (A2-1)-(A2-4).

At the step (A2-1), the terminal determines target pixels containing similar pixel information in the first target frame images.

The pixel information may be gray values of the pixels, RGB (red, green, and blue) passing values, etc. The terminal respectively determines the pixel information contained in the pixels in the first target frame images, and determines the target pixels containing similar pixel information in the multiple first target frame images.

At the step (A2-2), the terminal determines positions of the target pixels in the first target frame images.

In this step, the terminal determines the position of the target pixel in each first target frame image. The terminal respectively determines the position of the target pixel included in each first target frame image.

At the step (A2-3), the terminal determines position differences of the target pixels based on the positions of the target pixels in adjacent ones of the first target frame images to obtains displacement vectors of the target pixels.

In this step, the terminal respectively determines the position differences of the target pixels in the adjacent first target frame images, so as to determine position changes of the target pixels in the adjacent first target frame images, and obtain the displacement vectors of the target pixels.

At the step (A2-4), the terminal constitutes the displacement information of the target object in the first target frame images by the displacement vectors of the target pixels in the multiple first target frame images.

In this step, the terminal constitutes the displacement information of the target object according to the displacement vector of the target pixel in each first target frame image.

In this implementation, the displacement information of the first target frame images is determined through the target pixels in the first frame images, so that the terminal can determine the displacement information of the target object based on the changes of the pixels, thus enabling the terminal to identify the dynamic event of the target object, so that the terminal can determine the video tag of the video to be processed according to the dynamic event of the target object, thus enriching the video tag of the video to be processed.

At the block (A3), the terminal determines the time-sequence feature information among the first target frame images in the video to be processed based on the displacement information of the target object in the first target frame images.

The displacement information may be coordinate differences of the target object in different first target frame images. Accordingly, the terminal determines the coordinate differences between pixels containing similar image information according to the positions of pixels containing similar image information in different first target frame images, and takes the coordinate differences as the displacement information of the target object. The displacement information may be vector information. Accordingly, the time-sequence feature information may be a matrix composed of different vector information.

The process may be realized through the following steps (A3-1)-(A3-3).

At the step (A3-1), the terminal determines a time sequence of the first target frame images in the video to be processed.

In this step, the terminal may determine the time-sequence feature information of the target object in the at least one first target frame image according to the displacement information of the target object in each two adjacent target frame images. Since features in the video are related to a playing order of the video, as shown in FIG. 4, when the video is played in a positive order (i.e., from left to right), its time-sequence feature information is that the object moves from left to right, and when the video is played in a reverse order (i.e., from right to left), its time-sequence feature information is that the object moves from right to left. Therefore, the terminal needs to determine the time-sequence feature information of the video according to the playing order of the video to be processed.

At the step (A3-2), the terminal constitutes a vector matrix by the displacement vectors of the target pixels based on the time sequence and preset weights.

Among them, the terminal may respectively determine the displacement information of the target object in the adjacent one of the first target frame images, perform weighted fuse on the displacement information of the target object in the multiple first target frame images, fuse the displacement information of the target object in the multiple first target frame images, and obtain the time-sequence feature information among the multiple first target frame images.

Among them, the terminal may perform weighted fuse on the displacement information according to the preset weights. In an implementation, the preset weight of the displacement information of the target object in each first target frame image is the same, that is, the terminal fuses the displacement information of the target object in an average way to obtain the time-sequence feature information among the multiple first target frame images. In another implementation, if the preset weights are different according to the time points corresponding to the first target frame images, the terminal may weight the displacement information of the target object in the target frame images according to the different time points to obtain the time-sequence feature information among the first target frame images.

At the step (A3-3), the terminal takes the vector matrix as the time-sequence feature information.

In this implementation, the time-sequence feature information among the multiple first target frame images is determined by the displacement information of the target object in the multiple first target frame images, so that the terminal can determine the dynamic event of the video to be processed corresponding to the first target frame images according to the time-sequence feature information, thereby generating the dynamic event description text corresponding to the video to be processed, so as to determine the video tag of the video to be processed. In this situation, the video tag of the video to be processed can include the association between continuous frames of the video to be processed, thereby extracting event information in the video to be processed, so that the video tag of the video to be processed can better reflect the content of the video.

In an embodiment, the terminal may extract some of the frame images in the video to be processed as the first target frame images. In a first implementation, the first target frame images of the video to be processed may be some frame images randomly extracted by the terminal from the frame images of the video to be processed. In this implementation, the terminal may randomly extract some frame images from the frame images of the video to be processed, and take the randomly extracted frame images as the first target frame images, so that the terminal does not need to process all the frame images, which reduces the calculation amount of the terminal and improves the operation efficiency of the terminal. In addition, extracting the first target frame images by random extraction has low requirements for the terminal to extract the first target frame images, which reduces requirements for the terminal.

In a second implementation, the terminal may extract the first target frame images from the video to be processed according to a target time period. Among them, the number, duration, and position of the target time period may be set as required. For example, the duration of the target time period may be 10 seconds, or 15 seconds, etc. The target time period may be an intermediate time period of the video to be processed, a time period in which the target object appears, or the like. In this implementation, by extracting frame images of a specified time period in the video to be processed as the first target frame images, the terminal may extract the first target frame images within the effective time period for processing, which improves the effectiveness of processing the video to be processed and the processing efficiency of processing the video to be processed.

In a third implementation, the terminal may extract frame images according to the target object appearing in the video to be processed. The terminal may respectively detect the target object in the video to be processed, and extract the frame images of the target object from the video to be processed as the first target frame images. Among them, the terminal may extract multiple groups of first target frame images from the video to be processed according to different target objects, each group of first target frame images corresponds to one kinds of target object, process the multiple groups of first target frame images respectively, and determine the time-sequence feature information of each group of first target frame images. In this implementation, the first target frame images are extracted from the video to be processed according to the target object, thereby eliminating invalid frame images without the target object, and improving the processing efficiency of the video to be processed.

In another embodiment, the terminal may process all frame images of the video to be processed. Accordingly, the terminal may determine each frame image in the video to be processed as the first target frame image. In this implementation, the terminal takes all the frame images of the video to be processed as the first target frame images, so that the terminal can more comprehensively understand the content of the video to be processed, so as not to lose information and ensure the accuracy of the video tag.

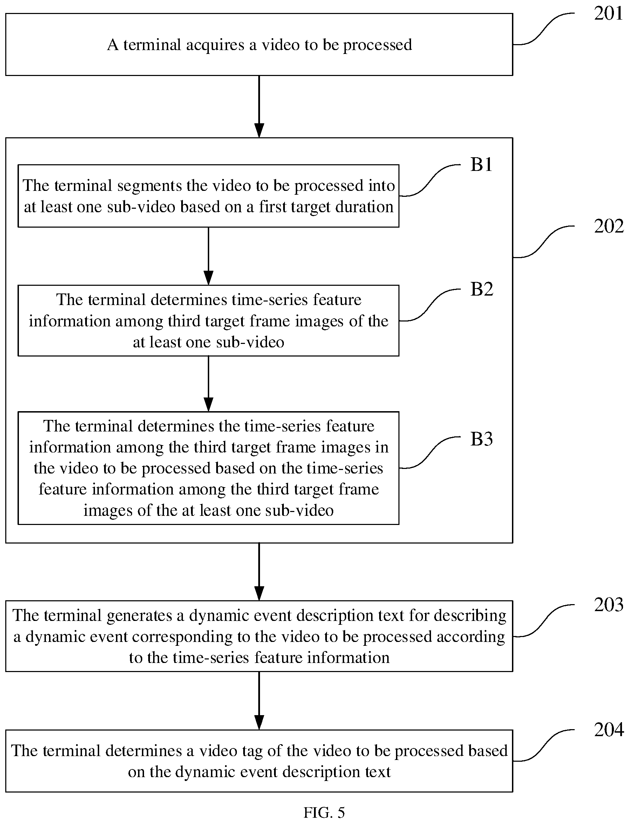

In a first example, the terminal may directly take frame images corresponding to the video to be processed as the first target frame images. In a second example, the terminal may segment the video to be processed, and take frame images corresponding to the segmented multiple sub-videos as the first target frame images respectively. As shown in FIG. 5, this process may be realized through the following blocks (B1)-(B3).

At the block (B1), the terminal segments the video to be processed into at least one sub-video according to a first target duration.

In this block, the terminal determines the first target duration, and segments the video to be processed into the at least one sub-video whose playback duration is the first target duration. Among them, the first target duration may be defined by the terminal system or the user. Accordingly, the first target duration can be set and changed as required. In the embodiment of the present embodiment, the first target duration is not specifically limited. For example, the first target duration may be 10 seconds, 15 seconds, or 20 seconds. The first target duration may also be determined according to a video duration of the video to be processed. For example, the user may define the number of sub-videos by the terminal, and the terminal determines the first target duration corresponding to each sub-video according to the number of sub-videos and the video duration of the video to be processed.

In an implementation, the terminal may directly segment the video to be processed into at least one sub-video according to the first target duration. In another implementation, the terminal may determine a second target duration, and segment a portion of the video to be processed within the second target duration and a portion of the video to be processed beyond the second target duration according to the second target duration. This process may be realized through the following steps (B1-1)-(B1-3).

At the step (B1-1), the terminal determines a video duration of the video to be processed.

In this step, the terminal may obtain video attribute information of the video to be processed, and obtain the video duration of the video to be processed from the video attribute information.

At the step (BI-2), in response to the video duration being less than the second target duration, the terminal segments the video to be processed based on the first target duration to obtain the at least one sub-video.

In this step, the terminal determines the second target duration. Among them, the second target duration may be a default second target duration of the terminal system, and the second target duration may also be the second target duration entered by the user. Accordingly, the second target duration may be set and changed as required. In the embodiment of the present embodiment, the second target duration is not specifically limited. For example, the second target duration may be 2 minutes or 3 minutes.

The terminal compares the size of the video duration and the second target duration. In response to the video duration being less than the second target duration, the terminal segments all the video to be processed into sub-videos according to the first target duration to obtain the at least one sub-video.

At the step (B1-3), in response to the video duration being no less than the second target duration, the terminal segments the video to be processed within the second target duration based on the first target duration to thereby obtain a first sub-video, and determines a second sub-video of the video to be processed, takes the first sub-video and the second sub-video as the at least one sub-video of the video to be processed, where the second sub-video is a sub-video extracted from the video to be processed exceeding the second target duration.

The terminal compares the video duration with the second target duration. In response to the video duration not less than the second target duration, the terminal segments the video to be processed into a portion within the second target duration and a portion other than the second target duration. The video to be processed within the second target duration is segmented according to the first target duration to obtain at least one first sub-video, and then extracted a second sub-video from the portion of the video to be processed other than the second target duration. The second sub-video may be a video with the first target duration in the portion of the video to be processed other than the second target duration, or a video with the first target duration at any position in the portion of the video to be processed other than the second target duration, which is not specifically limited in the embodiment of the present embodiment.

In this implementation, the terminal determines a segmenting mode of the video to be processed through the second target duration, so that the terminal may intercept the video to be processed according to the second target duration for the video with an excessively long video duration. Thus, while ensuring the integrity of the content of the video to be processed, the number of sub-videos processed by the terminal is reduced, thus reducing the workload of the terminal, and improving the computing efficiency of the terminal.

At the block (B2), the terminal determines time-sequence feature information among third target frame images of the at least one sub-video.

In this block, the terminal determines the multiple third target frame images of the at least one sub-video, and takes the third target frame images as the first target frame images of the video to be processed. Among them, the terminal may take all frame images in the at least one sub-video as the third target frame images, and the terminal may also take some frame images in the at least one sub-video as the third target frame images, which is not specifically limited in the embodiment of the present embodiment.

A process for the terminal to determine the time-sequence feature information among the multiple third target frame images of the at least one sub-video is similar to the process for the terminal to determine the time-sequence feature information among the multiple third target frame images of the video to be processed, that is, this block is similar to blocks (A1)-(A3), and will not be repeated here.

It should be noted that the terminal may successively determine the time-sequence feature information among multiple third target frame images of the sub-video. The terminal may also determine the time-sequence feature information among the third target frame images of multiple sub-videos at the same time, so as to improve the efficiency of processing the video to be processed.

It should be further noted that when the terminal has determined the time-sequence feature information among multiple third target frame images of the sub-video, it can delete the sub-video to prevent occupying a storage space in the terminal.

At the block (B3), the terminal determines the time-sequence feature information among the third target frame images in the video to be processed based on the time-sequence feature information among the third target frame images of the at least one sub-video.

In this block, the terminal may fuse the time-sequence feature information among the third target frame images corresponding to each sub-video, and the terminal may also fuse the time-sequence feature information among the third target frame images corresponding to the multiple sub-videos, to thereby obtain the time-sequence feature information among the third target frame images of the video to be processed.

In this implementation, by segmenting the video to be processed into the at least one sub-video, the time-sequence feature information among the multiple third target frame images of the target video to be processed is determined according to the at least one sub-video. By segmenting the video to be processed, the terminal may process the multiple sub-videos at the same time, which improves the processing efficiency of the terminal.

At the block 203: the terminal generates a dynamic event description text for describing a dynamic event corresponding to the video to be processed based on the time-sequence feature information.

Among them, the terminal may generate different dynamic description texts according to the matrix composed of different time-sequence feature information. The dynamic event description text may be composed of the description text of the target object and actions of the target object.

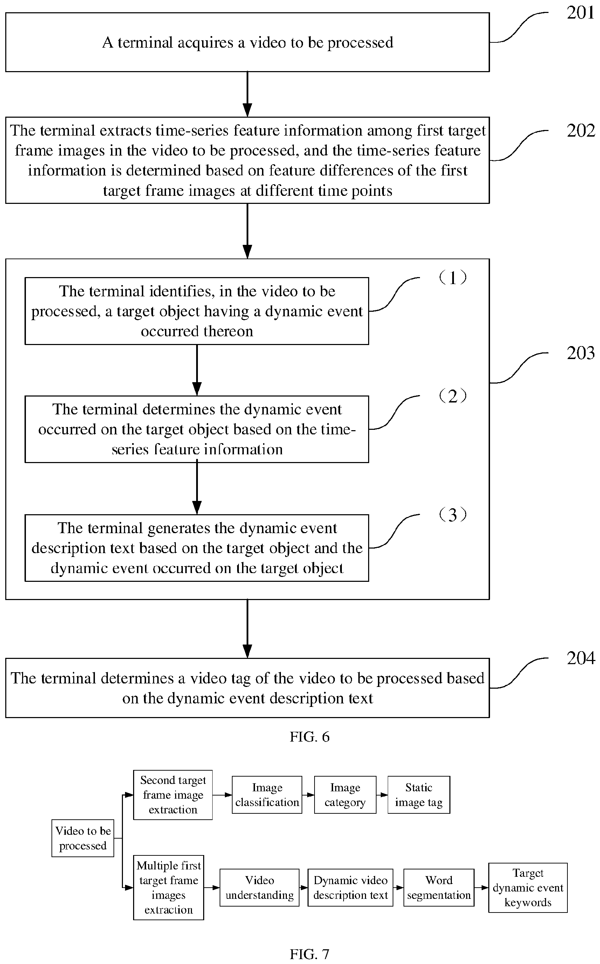

The terminal may determine the dynamic event description text corresponding to the video to be processed through the video classification model. As shown in FIG. 6, this block may be realized through the following blocks (1)-(3).

At the block (1), the terminal identifies , in the video to be processed, a target object having a dynamic event occurred thereon.

This block is similar to the process of determining the target object in the block (A1), and will not be repeated here.

At the block (2), the terminal determines the dynamic event occurred on the target object based on the time-sequence feature information.

This block may be realized through the following steps (2-1)-(2-2).

At the step (2-1), the terminal acquires the video classification model, and the video classification model is configured to determine the dynamic event occurred on the target object based on the time-sequence feature information.

The video classification model may be three-dimensional convolutional neural network (3D-CNN), and the 3D-CNN model may include a temporal shift module (TSM). The TSM is used to generate dynamic events according to dynamic feature information.

At the step (2-2), the terminal inputs the time-sequence feature information into the video classification model to obtain the dynamic event occurred on the target object in the video to be processed.

In this step, the terminal inputs the time-sequence feature information corresponding to multiple first target frame images into the video classification model, classifies the video to be processed according to the time-sequence feature information through the video classification model, and obtains the dynamic event occurred on the target object in the video to be processed.

In this implementation, the dynamic event occurred on the target object is identified by the video classification model, which improves the accuracy of the dynamic event.

At the block (3), the terminal generates the dynamic event description text according to the target object and the dynamic event occurred on the target object.

In this implementation, the video classification model classifies the video to be processed according to the time-sequence feature information among the multiple first target frame images, and obtains the dynamic event description text corresponding to the classification result, thus improving the efficiency and accuracy of determining the dynamic event description text of the video to be processed.

At the block 204: the terminal determines a video tag of the video to be processed based on the dynamic event description text.

In an implementation, the terminal may directly determine the dynamic event description text as the video tag of the video to be processed. In another implementation, the terminal may segment the dynamic event description text and select the video tag of the video to be processed from keywords obtained after word segmentation.

When the terminal performs the word segmentation on the dynamic event description text and selects the video tag of the video to be processed from the keywords obtained after the word segmentation, the terminal may determine the video tag of the video to be processed according to the dynamic event description text through the following steps (1)-(3), as shown in FIG. 5.

At the step (1), the terminal performs word segmentation on the dynamic event description text to obtain multiple keywords.

In this step, the terminal segments the dynamic event description text into the multiple keywords. Among them, the terminal may employ a reverse maximum match (RMM) method based on dictionary or thesaurus to segment the dynamic event description text into keywords or phrases. For example, when the dynamic event description text is "playing soccer on grass", the terminal may segment the dynamic event description text into "playing/ soccer / on / grass" by using the RMM algorithm.

At the step (2), the terminal selects target dynamic event keywords whose parts of speech are target parts of speech from the multiple keywords.

In this step, the terminal may select the target dynamic event keywords from the multiple keywords obtained by segmenting according to the parts of speech of the word. Among them, the target parts of speech may be set and changed as required, and the number of the target parts of speech may also be set and changed as required, which is not specifically limited in the embodiment of the present disclosure. For example, the target parts of speech may be 2, which are nouns and verbs respectively.

Accordingly, in this step, the terminal determines the parts of speech of the segmented keywords, compares the parts of speech of the segmented keywords with the target parts of speech, selects the keywords corresponding to the target parts of speech from the multiple keywords, and takes the keywords as the target dynamic event keyword. For example, continuously taking the multiple keywords obtained in the step (1) for description, the terminal determines that the part of speech of "on" is a preposition, "grass" is a noun, "playing" is a verb, "soccer" is a noun. When the target parts of speech include verbs and nouns, the selected target dynamic time keywords are "grass", "playing", and "soccer".

In another implementation, the terminal may also extract a phrase composed of the target part of speech from the multiple keywords. For example, continuously taking the multiple keywords obtained in the step (1) for description, when the target parts of speech include a verb and a noun, the extracted keywords are phrases composed of the verb and the noun, the phrase that may form the verb and the noun in the multiple keywords is "playing" and "soccer", and the target dynamic event keyword selected by the terminal is "playing soccer".

At the step (3), the terminal forms the video tag of the video to be processed by the target dynamic event keywords.

In this step, the terminal may select the target dynamic event keyword to form the video tag of the video to be processed. For example, if the target dynamic event keyword is "playing soccer", the terminal determines the video tag of the video to be processed as "playing soccer".

In this implementation, the dynamic event description text is segmented, and the target dynamic event keyword with part of speech as the target part of speech is selected from the multiple keywords obtained from the word segmentation, so that the target dynamic event keyword is a keyword with more effective information, so that the video tag of the video to be processed is more accurate.

It should be noted that the terminal may fuse the time-sequence feature information of each sub-video to obtain the time-sequence feature information of the video to be processed. In the blocks 203-204, the terminal may obtain the video tag of the video to be processed. The terminal may also perform the blocks 203-204 based on each sub-video to obtain multiple video tags of the video to be processed. In an implementation, the terminal takes the video tag corresponding to each sub-video as the video tag of the video to be processed. In another implementation, the terminal votes on the video tag corresponding to at least one sub-video, and the video tag with the most votes is used as the video tag of the video to be processed.

In the embodiment of the present disclosure, the video to be processed is acquired. The time-sequence feature information among the multiple first target frame images in the video to be processed is extracted, and the time-sequence feature information is the information determined according to the feature differences of the multiple first target frame images at the different time points. The dynamic event description text for describing the dynamic event corresponding to the video to be processed is generated according to the time-sequence feature information. The video tag of the video to be processed is determined according to the dynamic event description text. By acquiring the dynamic event description text in the video to be processed, the video tag of the video to be processed is determined, and the video information is mined more deeply, so that users can manage the video more accurately and conveniently.

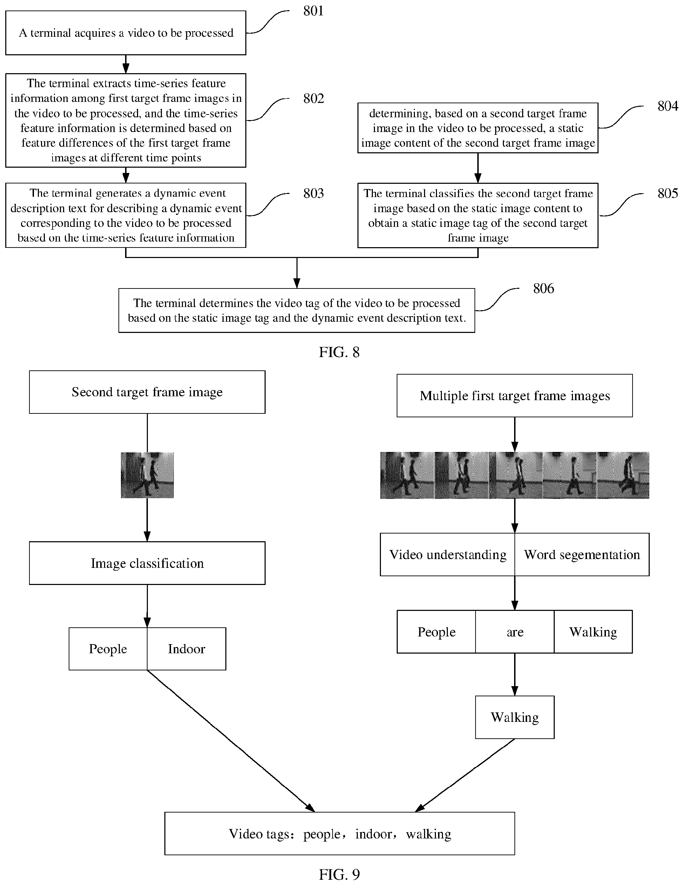

As shown in FIG. 7, the terminal may also determine a second target frame image in the video to be processed, classify the second target frame image, obtain a static image tag of the second target frame image, and obtain the dynamic event description text of the target frame image, and determine the video tag of the video to be processed through the static image tag and the dynamic event description text. FIG. 8 illustrates a flowchart of a video tag determination method according to an exemplary embodiment of the present disclosure. The execution subject in the embodiment of the present embodiment may be the terminal 100, the processor 110 in the terminal 100, or the operating system in the terminal 100. The embodiment takes the execution subject as the terminal 100 as an example for description. In the embodiment of the present disclosure, the displacement information of the target object in the first target frame images and the image category tag of the second target frame image in the video to be processed are used as an example of the video tag to be processed for description. The method may include blocks 801 through 806 as follows.

At the block 801: the terminal acquires a video to be processed.

This block is similar to the block 201, and will not be repeated here.

At the block 802: the terminal extracts time-sequence feature information among first target frame images in the video to be processed, and the time-sequence feature information is determined based on feature differences of the first target frame images at different time points.

This block is similar to the block 202, and will not be repeated here.

At the block 803: the terminal generates a dynamic event description text for describing a dynamic event corresponding to the video to be processed based on the time-sequence feature information.

This block is similar to the block 203, and will not be repeated here.

At the block 804: determining, based on a second target frame image in the video to be processed, a static image content of the second target frame image.

In this block, the terminal selects the second target frame image from the multiple frame images of the video to be processed. Among them, the second target frame image may be a first frame image in the video to be processed, or a frame image at any specified position in the video to be processed. In the embodiment of the present disclosure, the second target frame image is not specifically limited. The static image content may include a target object, environment information, and the like in the second target frame image.

The terminal performs target object recognition on the second target frame image to obtain the static image content in the second target frame image. Among them, the terminal may extract the static image content of the second target frame image according to the feature extraction technology. For example, the terminal may extract texture features, edge features, etc., of the second target frame image, and the terminal may determine the static image content of the second target frame image through the extracted static features.

At the block 805: the terminal classifies the second target frame image based on the static image content to obtain a static image tag of the second target frame image.

The terminal may recognize the second target frame image through an image category recognition model. The image category recognition model may be a lightweight classification model, such as a mobilenetV2 model.

The terminal inputs the second target frame image into the image category recognition model, classifies the second target frame image through the image category recognition model, and obtains the image category of the second target frame image. The terminal determines the static image tag of the second target frame image according to the image category of the second target frame image. In an implementation, the terminal takes the image category of the second target frame image as the static image tag of the target frame image. In another implementation, the terminal performs word segmentation on the image category of the obtained second target frame image, obtains static content keywords, and selects the static image tag of the second target frame image from the static content keywords.

It should be noted that the terminal may select one second target frame image from the video to be processed, and the terminal may also select multiple second target frame images from the video to be processed, respectively determine the static image tag of each second target frame image, and determine the static image tag corresponding to the video to be processed according to the multiple static image tags.

It should be further noted that multiple images may be stored in a video library where the video to be processed is located. The terminal needs to recognize these images respectively to obtain the image tags corresponding to these images. The terminal may use the same image category recognition model to classify these images and the second target frame image.

It should be still further noted that the terminal may first determine the dynamic event description text of the video to be processed, and then determine the static image tag of the video to be processed. Alternatively, the terminal may first determine the static image tag of the video to be processed, and then determine the dynamic event description text of the video to be processed. Alternatively, the terminal may also simultaneously determine the dynamic feature description text of the video to be processed and determine the static image tag of the video to be processed. That is, the terminal may first execute the blocks 801-803, and then execute the blocks 804-805; the terminal may also execute the blocks 804-805 first and then execute the blocks 801-803; or the terminal may also execute the blocks 801-803 and then blocks 804-805 simultaneously. In the embodiment of the present embodiment, the order in which the terminal determines the dynamic description text and the static image tag of the video to be processed is not specifically limited.

At the block 806: the terminal determines the video tag of the video to be processed based on the static image tag and the dynamic event description text.

In this block, the terminal determines a target dynamic event keyword of the video to be processed according to the dynamic event description text, and the static image tag of the video to be processed and the target dynamic event keyword form the video tag of the video to be processed. Among them, a process that the terminal determines the target dynamic event keyword of the video to be processed according to the dynamic event description text is similar to the process that the terminal determines the video tag of the video to be processed according to the dynamic event description text in the block 204, and will not be repeated here.

As shown in FIG. 9, the terminal performs image classification on the second target frame respectively to obtain the static image tag of the object of the second target frame image, for example, "people" and "indoor". The dynamic event description text of multiple first target frame images is determined, and the dynamic event description text is segmented to obtain multiple keywords. For example, "people", "is" and "walking", the target part of speech is selected from the multiple keywords as the target dynamic event keyword, for example, "walking". The static image tag and the target dynamic event keyword form the video tag, which may be "people", "indoor", and "walking".

In the embodiment of the present disclosure, the video to be processed is acquired. The time-sequence feature information among the multiple first target frame images in the video to be processed is extracted, and the time-sequence feature information is the information determined according to the feature differences of the multiple first target frame images at the different time points. The dynamic event description text for describing the dynamic event corresponding to the video to be processed is generated according to the time-sequence feature information. The video tag of the video to be processed is determined according to the dynamic event description text. By acquiring the dynamic event description text in the video to be processed, the video tag of the video to be processed is determined. The video tag of the video to be processed is composed of the static image tag of the video to be processed and the target dynamic event keyword, so that the video information is mined more deeply, the tag content of the video to be processed is enriched, and dimensions of video management by users are enriched, so that the users can manage the video more accurately and conveniently.

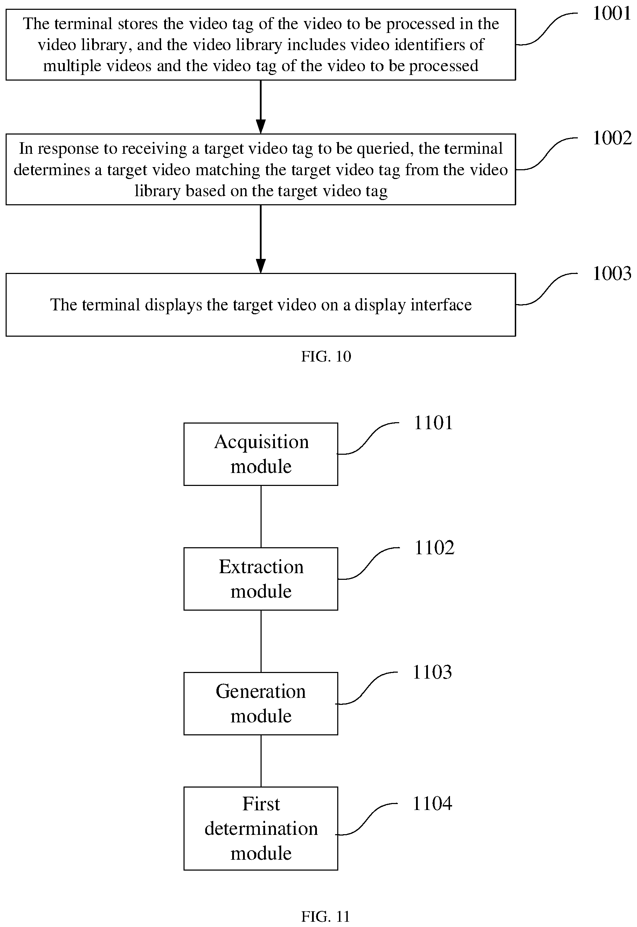

When the terminal acquires the video tag to be processed, the terminal may associate and store the video tag and the video corresponding to the video tag, so that the terminal may classify and manage the video in the video library according to the video tag. The terminal may also receive the target video tag input by the user, and query the target video according to the target video tag. FIG. 10 illustrates a flowchart of a video tag determination method according to an exemplary embodiment of the present disclosure. The execution subject in the embodiment of the present embodiment may be the terminal 100, the processor 110 in the terminal 100, or the operating system in the terminal 100. The embodiment takes the execution subject as the terminal 100 as an example for description. In the embodiment of the present embodiment, the target video in the video library according to the target video tag will be described as an example. The method may include blocks 1001 through 1003 as follows.

At the block 1001: the terminal stores the video tag of the video to be processed in the video library, and the video library includes video identifiers of multiple videos and the video tag of the video to be processed.

When the terminal acquires the video tag to be processed, and the terminal may associate and store the video tag with the video corresponding to the video tag.

The video library may be a video library corresponding to an album software in the terminal. Accordingly, a video search box is displayed in the album software, and the terminal receives the target video tag input by the user through the video search box. Among them, any number of target video tags may be received in the video search box. In an implementation, the number of received target video tags of the terminal is not specifically limited. In another implementation, the terminal receives a target number of target video tags. The target quantity can be set and changed as required. In the embodiment of the present embodiment, the target number is not specifically limited. For example, the target number may be 1, 3, or 5.

It should be noted that, in response to receiving a target number of video tags in the terminal, the terminal may also receive video tags below the target number. In response to the number of the target video tags input by the user being greater than the target number, the terminal may send number prompt information to the user, where the number prompt information is used to prompt the user to reduce the input target video tags. Alternatively, in response to the number of target video tags input by the user being greater than the target number, the terminal may directly take the first few video tags in the target video tags input by the user as the target video tags.

At the block 1002: in response to receiving a target video tag to be queried, the terminal determines a target video matching the target video tag from the video library based on the target video tag.

In response to the terminal receiving the target video tag to be queried, the terminal acquires the target video carrying the target video tag from the video library according to the target video tag.

At the block 1003: the terminal displays the target video on a display interface.

The display interface may be a display interface of the album software in the terminal or a display interface of a video player. Accordingly, after determining the target video, the terminal may display the target video in the display interface of the album software or the display interface of the video player.

In the embodiment of the present disclosure, the video to be processed is acquired. The time-sequence feature information among the multiple first target frame images in the video to be processed is extracted, and the time-sequence feature information is the information determined according to the feature differences of the multiple first target frame images at the different time points. The dynamic event description text for describing the dynamic event corresponding to the video to be processed is generated according to the time-sequence feature information. The video tag of the video to be processed is determined according to the dynamic event description text, and the video is searched according to the received target video tag. Since the stored video tag contains deeper video information and rich tag content, the user can search the video more accurately and conveniently.

FIG. 11 illustrates a structural block diagram of a video tag determination apparatus according to an embodiment of the present disclosure. The video tag determination apparatus may be implemented as all or part of the processor 110 by software, hardware, or a combination of both. The device may include an acquisition module 1101, an extraction module 1102, a generation module 1103, and a first determination module 1104.

The acquisition module 1101 is configured to acquire a video to be processed.

The extraction module 1102 is configured to extract time-sequence feature information among first target frame images in the video to be processed, and the time-sequence feature information is determined based on feature differences of the first target frame images at different time points.

The generation module 1103 is configured to generate a dynamic event description text for describing a dynamic event corresponding to the video to be processed based on the time-sequence feature information.

The first determination module 1104 is configured to determine a video tag of the video to be processed based on the dynamic event description text.

In an implementation, the extraction module 1102 is specifically configured to determine a target object in the first target frame images; determine displacement information of the target object in the first target frame images based on positions of the target object in the first target frame images; and determine the time-sequence feature information among the first target frame images in the video to be processed according to the displacement information of the target object in the first target frame images.

In an implementation, the extraction module 1102 is specifically configured to determine target pixels containing similar pixel information in the first target frame images; determine positions of the target pixels in the first target frame images; determine position differences of the target pixel according to the positions of the target pixels in adjacent ones of the first target frame images to obtain displacement vectors of the target pixels; and constitute the displacement information of the target object in the first target frame images by the displacement vectors of the target pixels in the first target frame images.

In an implementation, the extraction module 1102 is specifically configured to determine a time sequence of the first target frame images in the video to be processed; constitute a vector matrix the displacement information of the target pixels based on the time sequence and preset weights; and take the vector matrix as the time-sequence feature information.

In an implementation, the generation module 1103 is specifically configured to identify, in the video to be processed, a target object having a dynamic event occurred thereon; determine the dynamic event occurred on the target object according to the time-sequence feature information; and generate the dynamic event description text is generated based on the target object and the dynamic event occurred on the target object.

In an implementation, the generation module 1103 is specifically configured to acquire a video classification model, where the video classification model is configured to determine the dynamic event occurred on the target object according to the time-sequence feature information; and input the time-sequence feature information into the video classification model to obtain the dynamic event occurred on the target object in the video to be processed.

In an implementation, the first determination module 1104 is further configured to perform word segmentation on the dynamic event description text to obtain multiple keywords; select target dynamic event keywords whose parts of speech are target parts of speech from the multiple keywords; and form the video tag of the video to be processed by the target dynamic event keywords.

In an implementation, the apparatus may further include:
a second determination module, configured to determine a static image content of a second target frame image based on the second target frame image in the video to be processed; and
an image classification module, configured to classify the second target frame image based on the static image content to obtain a static image tag of the second target frame image.

The first determination module 1104 is specifically configured to determine a video tag of the video to be processed based on the static image tag and the dynamic event description text.

In an implementation, the extraction module 1102 is specifically configured to segment the video to be processed into at least one sub-video according to a first target duration; determine time-sequence feature information among third target frame images of the at least one sub-video; determine the time-sequence feature information among the first target frame images in the video to be processed based on the time-sequence feature information among the third target frame images of the at least one sub-video.

In an implementation, the extraction module 1102 is specifically configured to determine a video duration of the video to be processed; in response to the video duration being less than a second target duration, segment the video to be processed based on the first target duration to thereby obtain the at least one sub-video; in response to the video duration being no less than the second target duration, segment the video to be processed within the second target duration according to the first target duration to thereby obtain a first sub-video, determine a second sub-video of the video to be processed, and take the first sub-video and the second sub-video as the at least one sub-video of the video to be processed, where the second sub-video is a sub-video extracted from the video to be processed exceeding the second target duration.

In an implementation, the apparatus may further include:
a storage module, configured to store the video tag of the video to be processed into a video library, where the video library may include video identifiers of multiple videos and the video tag of the video to be processed;
a third determination module, configured to determine, in response to receiving a target video tag to be queried, a target video matching the target video tag from the video library based on the target video tag; and
a display module, configured to display the target video in a display interface.

In the embodiment of the present disclosure, the video to be processed is acquired. The time-sequence feature information among the multiple first target frame images in the video to be processed is extracted, and the time-sequence feature information is the information determined according to the feature differences of the multiple first target frame images at the different time points. The dynamic event description text for describing the dynamic event corresponding to the video to be processed is generated according to the time-sequence feature information. The video tag of the video to be processed is determined according to the dynamic event description text. By acquiring the dynamic event description text in the video to be processed, the video tag of the video to be processed is determined, and the video information is mined more deeply, so that users can manage the video more accurately and conveniently.

The embodiment of the present embodiment may further provide a computer-readable medium stored with at least one instruction, and the at least one instruction is loaded and executed by a processor to implement the video tag determination method shown in the above embodiments.

The embodiment of the present embodiment may further provide a computer program product stored with at least one instruction, and the at least one instruction is loaded and executed by a processor to implement the video tag determination method shown in the above embodiments.

It should be appreciated by those skilled in the art that in one or more of the above embodiments, functions described in the embodiments of the present disclosure may be implemented in hardware, software, firmware, or any combination thereof. When implemented using software, the functions may be stored in a computer-readable medium or transmitted as one or more instructions or codes on a computer-readable medium. The computer-readable medium may include a computer storage medium and a communication medium, and the communication medium may include any medium that facilitates the transmission of a computer program from one place to another. The storage medium may be any available medium that may be accessed by general or special computers.

The above is alternative embodiments of the present embodiment and is not intended to limit the present disclosure. Any modifications, equivalent substitutions, changes, etc. made within the spirit and principles of the present disclosure shall be included in the scope of protection of the present disclosure.

## Claims

1. A video tag determination method, comprising:
acquiring a video to be processed;
extracting time-sequence feature information among first target frame images in the video to be processed, wherein the time-sequence feature information is determined based on feature differences of the first target frame images at different time points;
generating, based on the time-sequence feature information, a dynamic event description text for describing a dynamic event corresponding to the video to be processed; and
determining, based on the dynamic event description text, a video tag of the video to be processed.

2. The method according to claim 1, wherein the extracting time-sequence feature information among first target frame images in the video to be processed comprises:
determining positions of a target object in the first target frame images, wherein the target object is a same object included in the first target frame images;
determining, based on the positions of the target object in the first target frame images, displacement information of the target object in the first target frame images; and
determining, based on the displacement information of the target object in the first target frame images, the timing-series feature information among the first target frame images in the video to be processed.

3. The method according to claim 2, wherein the determining, based on the positions of the target object in the first target frame images, displacement information of the target object in the first target frame images comprises:
determining target pixels containing similar pixel information in the first target frame images;
determining positions of the target pixels in the first target frame images;
determining, based on the positions of the target pixels in adjacent ones of the first target frame images, position differences of the target pixels to obtain displacement vectors of the target pixels; and
constituting the displacement information of the target object in the first target frame images by the displacement vectors of the target pixels in the first target frame images.

4. The method according to claim 2, wherein the determining, based on the displacement information of the target object in the first target frame images, the timing-series feature information among the first target frame images in the video to be processed comprises:
determining a time sequence of the first target frame images in the video to be processed;
constituting, based on the time sequence and preset weights, a vector matrix by the displacement vectors of the target pixels; and
taking the vector matrix as the time-sequence feature information.

5. The method according to claim 1, wherein the generating, based on the time-sequence feature information, a dynamic event description text for describing a dynamic event corresponding to the video to be processed comprises:
identifying, in the video to be processed, a target object having a dynamic event occurred thereon;
determining, based on to the time-sequence feature information, the dynamic event occurred on the target object; and
generating, based on the target object and the dynamic event occurred on the target object, the dynamic event description text.

6. The method according to claim 5, wherein the determining, based on the time-sequence feature information, the dynamic event occurred on the target object comprises:
acquiring a video classification model, wherein the video classification model is configured to determine the dynamic event occurred on the target object based on the time-sequence feature information; and
inputting the time-sequence feature information into the video classification model to obtain the dynamic event occurred on the target object in the video to be processed.

7. The method according to claim 1, wherein the determining, based on the dynamic event description text, a video tag of the video to be processed comprises:
performing word segmentation on the dynamic event description text to obtain a plurality of keywords;
selecting, from the plurality of keywords, target dynamic event keywords whose parts of speech are target parts of speech; and
forming the video tag of the video to be processed by the target dynamic event keywords.

8. The method according to claim 1, further comprising:
determining, based on a second target frame image in the video to be processed, a static image content of the second target frame image; and
classifying, based on the static image content, the second target frame image to obtain a static image tag of the second target frame image;
wherein the determining, based on the dynamic event description text, a video tag of the video to be processed comprises:
determining, based on the static image tag and the dynamic event description text, the video tag of the video to be processed.

9. The method according to claim 1, wherein the extracting time-sequence feature information among first target frame images in the video to be processed comprises:
segmenting, based on a first target duration, the video to be processed into at least one sub-video;
determining time-sequence feature information among third target frame images of the at least one sub-video; and
determining, based on the time-sequence feature information among the third target frame images of the at least one sub-video, the time-sequence feature information among the first target frame images in the video to be processed.

10. The method according to claim 9, wherein the segmenting, based on a first target duration, the video to be processed into at least one sub-video comprises:
determining a video duration of the video to be processed;
in response to the video duration being less than a second target duration, segmenting the video to be processed based on the first target duration to thereby obtain the at least one sub-video;
in response to the video duration being no less than the second target duration, segmenting the video to be processed within the second target duration based on the first target duration to thereby obtain a first sub-video, determining a second sub-video of the video to be processed, and taking the first sub-video and the second sub-video as the at least one sub-video of the video to be processed, wherein the second sub-video is a sub-video extracted from the video to be processed exceeding the second target duration.

11. The method according to any one of claims 1-10, further comprising:
storing the video tag of the video to be processed in a video library, wherein the video library comprises video identifiers of a plurality of videos and the video tag of the video to be processed;
determining, in response to receiving a target video tag to be queried, a target video matching the target video tag from the video library based on the target video tag; and
displaying the target video on a display interface.

12. A video tag determination apparatus, comprising:
an acquisition module, configured to acquire a video to be processed;
an extraction module, configured to extract time-sequence feature information among first target frame images in the video to be processed, wherein the time-sequence feature information is determined based on feature differences of the first target frame images at different time points;
a generation module, configured to generate, based on the time-sequence feature information, a dynamic event description text for describing a dynamic event corresponding to the video to be processed; and
a first determination module, configured to determine, based on the dynamic event description text, a video tag of the video to be processed.

13. The apparatus according to claim 12, wherein the extraction module is specifically configured to:
determine positions of a target object in the first target frame images, wherein the target object is a same object included in the first target frame images;
determine, based on the positions of the target object in the first target frame images, displacement information of the target object in the first target frame images; and
determine, based on the displacement information of the target object in the first target frame images, the timing-series feature information among the first target frame images in the video to be processed.

14. The apparatus according to claim 13, wherein the extraction module is specifically configured to:
determine target pixels containing similar pixel information in the first target frame images;
determine positions of the target pixels in the first target frame images;
determine, based on positions of the target pixels in adjacent ones of the first target frame images, position differences of the target pixels to obtain displacement vectors of the target pixels; and
constituting the displacement information of the target object in the first target frame images by the displacement vectors of the target pixels in the first target frame images.

15. The apparatus according to claim 13, wherein the extraction module is specifically configured to:
determine a time sequence of the first target frame images in the video to be processed;
constituting, based on the time sequence and preset weights, a vector matrix by the displacement vectors of the target pixels; and
take the vector matrix as the time-sequence feature information.

16. The apparatus according to claim 12, wherein the generation module is specifically configured to:
identify, in the video to be processed, a target object having a dynamic event occurred thereon;
determine, based on the time-sequence feature information, the dynamic event occurred on the target object; and
generate, based on the target object and the dynamic event occurred on the target object, the dynamic event description text.

17. The apparatus according to claim 16, wherein the generation module is specifically configured to:
acquire a video classification model, wherein the video classification model is configured to determine the dynamic event occurred on the target object based on the time-sequence feature information; and
input the time-sequence feature information into the video classification model to obtain the dynamic event occurred on the target object in the video to be processed.

18. The apparatus according to claim 12, wherein the first determination module is specifically configured to:
perform word segmentation on the dynamic event description text to obtain a plurality of keywords;
select, from the plurality of keywords, target dynamic event keywords whose parts of speech are target parts of speech; and
form the video tag of the video to be processed by the target dynamic event keywords.

19. A terminal, comprising: a processor and a memory; wherein the memory is stored with at least one instruction, and the at least one instrument is configured to be executed by the processor to implement the video tag determination method according to any one of claims 1 to 11.

20. A computer-readable storage medium, wherein the computer-readable storage medium is stored with at least one instruction, and the at least one instrument is configured to be executed by a processor to implement the video tag determination method according to any one of claims 1 to 11.
